Europäisches Patentamt

European Patent Office

Office européen des brevets

(11) Veröffentlichungsnummer: **0 071 809**
A2

# (12) EUROPÄISCHE PATENTANMELDUNG

(21) Anmeldenummer: 82106480.5

(22) Anmeldetag: 19.07.82

(51) Int. Cl.³: **B 60 C 11/04**, B 60 C 11/18, B 60 C 11/00

(30) Priorität: 01.08.81 DE 3130574

(43) Veröffentlichungstag der Anmeldung: 16.02.83
Patentblatt 83/7

(84) Benannte Vertragsstaaten: AT BE DE FR GB IT LU NL SE

(71) Anmelder: BAYER AG, Zentralbereich Patente, Marken und Lizenzen, D-5090 Leverkusen 1, Bayerwerk (DE)

(72) Erfinder: Ippen, Jakob, Dr., Schleiermacherstrasse 17, D-5090 Leverkusen 1 (DE)
Erfinder: Stüttgen, Friedel, Albrecht-Dürer-Strasse 94, D-5024 Pulheim (DE)

(54) Reifen mit asymmetrischem Laufflächenprofil.

(57) Für den Alljahresbetrieb geeigneter Reifen mit einem Laufflächenprofil, das, in Laufrichtung betrachtet, bei der einen Reifenhälfte aus voneinander getrennten Profilblökken gebildet wird, während die andere Reifenhälfte ein im wesentlichen geschlossenes, nur durch Lamellen unterbrochenes Profil besitzt. Zweckmäßigerweise bestehen die beiden Reifenhälften aus verschiedenem Kautschuk, dessen Eigenschaften auf das jeweilige Laufflächenprofil abgestimmt sind.

0071809

BAYER AKTIENGESELLSCHAFT    5090 Leverkusen, Bayerwerk

Zentralbereich                                  3 .. 07. 81
Patente, Marken und Lizenzen   Kb/ABc


Reifen mit asymmetrischem Laufflächenprofil


Die Erfindung betrifft einen für den Alljahresbetrieb
geeigneten Reifen mit asymmetrischem Laufflächenprofil,
das, in Laufrichtung betrachtet, bei der einen Reifenhälfte aus voneinander getrennten Profilblöcken
gebildet wird, während die andere Reifenhälfte ein im
wesentlichen geschlossenes, nur durch Lamellen unterbrochenes Profil besitzt. Zweckmäßigerweise bestehen
die beiden Reifenhälften aus verschiedenem Kautschuk,
dessen Eigenschaften auf das jeweilige Laufflächenprofil abgestimmt sind.

In der Reifenindustrie ist es an sich üblich, einen
Reifen für den jeweiligen Einsatzzweck zu konzipieren.
Das führt dazu, daß seit längerer Zeit für die unterschiedlichen Bedingungen Sommer- bzw. Winterreifen in
Gebrauch sind. Hierbei ist festzustellen, daß der heutige Winterreifen wegen der unterschiedlichen Anforderungen an Schneehaftung bzw. Eishaftung schon einen
Kompromiß darstellt. So konnte in Versuchen nachgewiesen werden, daß die zugunsten einer guten Schneegriffigkeit hochstolligen M+S-Blöcke sich beim Bremsen auf Eis nicht wesentlich besser als entsprechende
Sommerreifen verhalten.


Le A 21 206

Andererseits fordert der Autofahrer immer mehr den Alljahresreifen, der jedoch einen noch größeren Kompromiß hinsichtlich winterlichen Straßenverhältnissen wie Tieftemperaturen, Eis und Schnee und sommerlichen Straßenbedingungen darstellt. Es sind bereits Alljahresreifen im Handel, die sich im wesentlichen darauf beschränken, durch die Profilgestaltung einen günstigen Kompromiß für die vorgenannten Anforderungen zu finden und dies gegebenenfalls mit einem entsprechenden Kompromiß für das verwendete Kautschukgemisch zu verbinden.

Weiterhin ist aus der DE-AS 1 224 630 ein Reifen mit unterschiedlich profiliertem Laufflächenbereich bekannt, womit wechselnden Straßenzuständen Rechnung getragen werden soll. Dabei besteht die Lauffläche auf der einen Seite aus einem Feinprofil, welches für einen normalen Straßenzustand geeignet ist, und auf der anderen Seite der Lauffläche aus einem Grobprofil, das auf Straßen mit Matsch und Schnee zur Wirkung kommt. Der Reifen hat jedoch den Nachteil, daß seine Griffigkeit bei Eis- und Schneeglätte meist nicht ausreicht. Um diesen Nachteil zu überwinden, wird in der DE-OS 2 263 455 vorgeschlagen, bei einem derartigen Reifen mit Grob- und Feinprofil wenigstens eines der Profile mit Löchern zu versehen, die als Saugnäpfe wirken und so die Haftung auf Eis verbessern.

Demgegenüber hat ein Reifen gemäß vorliegender Erfindung auf der einen Seite der Lauffläche ein durch Profilblöcke gestaltetes Mischprofil, das sowohl für

Le A 21 206

normale Straßenzustände als auch für Matsch und Schnee geeignet ist, und auf der anderen Seite der Lauffläche eine nur durch Lamellen unterbrochene Profilfläche, die eine gute Bodenhaftung bei Eis- und Schneeglätte gewährleistet.

Gegenstand der Erfindung ist ein Reifen mit asymmetrischer Laufflächenprofilierung, dadurch gekennzeichnet, daß, in Laufrichtung betrachtet, die Laufflächen der beiden Reifenhälften eine unterschiedliche Profilgestaltung aufweisen und aus unterschiedlichen, auf das jeweilige Laufflächenprofil spezifisch abgestimmten Kautschuken bestehen, wobei eine Reifenhälfte ein für Sommer- und Winterbedingungen geeignetes Mischprofil besitzt, das aus in sich verzahnten Profilblöcken besteht, die durch in Laufrichtung und quer dazu verlaufende Rillen getrennt sind, und die andere Reifenhälfte ein für Eis- und Schneeglätte geeignetes, nur durch Lamellen unterbrochenes, im wesentlichen geschlossenes Profil besitzt, dessen Lamellen in einem Winkel von 15-45° zur Laufrichtung angeordnet sind.

Ein solcher Reifen ist für den Alljahresbetrieb geeignet, ohne daß zusätzliche Maßnahmen erforderlich sind, um eine gute Bodenhaftung auch bei Eis- und Schneeglätte zu erreichen.

Vorzugsweise besteht die Reifenhälfte mit dem aus Profilblöcken gebildeten Mischprofil aus einem für Sommerreifen geeigneten Kautschuk und die Reifenhälfte mit dem durch Lamellen unterbrochenen Profil

Le A 21 206

0071809

aus einem für Winterreifen geeigneten Kautschuk. Vorteilhafterweise wird der dadurch bedingte unterschiedliche Abrieb der beiden Reifenhälften kompensiert, indem die tatsächliche Bodenaufstandsfläche (positive Aufstandsfläche) der jeweiligen Reifenhälfte entsprechend bemessen ist, so daß ein ungleichmäßiger Abrieb der Gesamtlauffläche vermieden wird. Die Zahl der Lamellen der betreffenden Reifenhälfte ist vorzugsweise so bemessen, daß jeweils 50 - 100, besonders bevorzugt 60 - 90 Lamellen Bodenkontakt haben. Bevorzugte Reifen sind außerdem solche, bei denen die außenliegende Seite durch die mit Lamellen versehene Reifenhälfte gebildet wird.

Da es sich üblicherweise um Gürtelreifen handelt, ist es zweckmäßig, daß die letzte Gürtellage zur Reifeninnenseite hin verläuft, um eine Konizität beim Reifen zu vermeiden.

In Versuchen konnte festgestellt werden, daß eine sehr gute Eishaftung des erfindungsgemäßen Reifens insbesondere dadurch erreicht wird, daß die mit Lamellen versehene Reifenhälfte aus einer für Winterreifen geeigneten Kautschukmischung besteht und eine hohe tatsächliche Bodenaufstandsfläche, d.h. einen hohen Positivanteil der Lauffläche besitzt. Die Haftwerte werden noch wesentlich verbessert, wenn pro Aufstandsfläche wie oben erwähnt wenigstens 50 bis etwa 100, vorzugsweise 60-90 Lamellen Bodenkontakt haben. Durch die sehr gute Eishaftung werden auch beim Bremsen auf Eis optimale Bremswerte erzielt. Darüberhinaus werden auch beim Fahren auf trockener Straße ausgezeichnete Seitenstabilitätswerte erreicht.

Le A 21 206

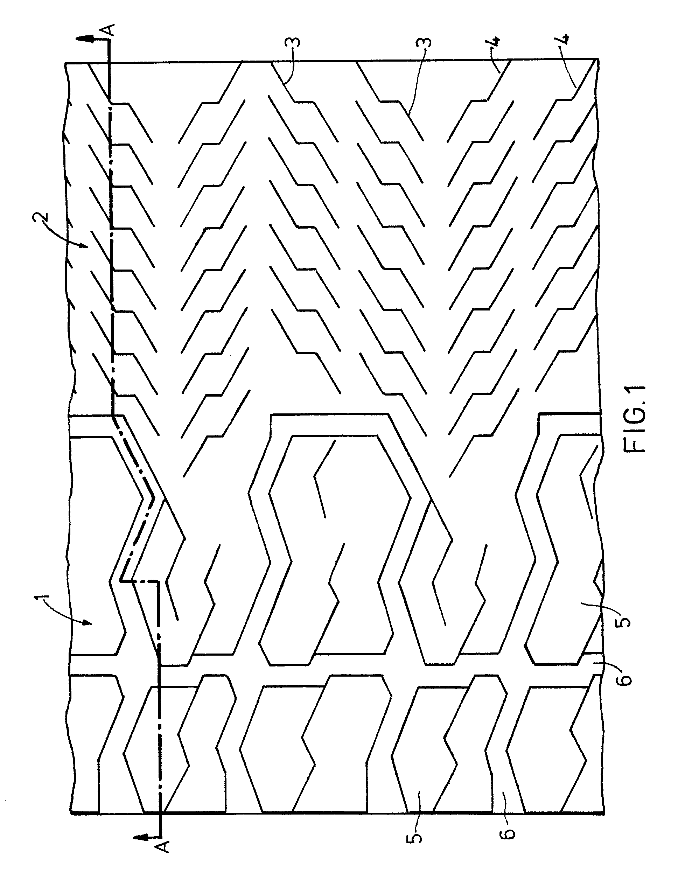

Eine Ausführungsform des erfindungsgemäßen Reifens ist in Fig. 1 in der Aufsicht auf die Lauffläche mit asymmetrischem Profil dargestellt. Die linke Hälfte (1) der Lauffläche besitzt ein bei Sommerreifen übliches querverzahntes Blockprofil, das aus den in sich verzahnten Profilblöcken (5) gebildet wird, die durch in Laufrichtung bzw. quer dazu verlaufende Rillen (6) getrennt sind. Im Mittelbereich der Lauffläche geht das Blockprofil in das Profil der rechten Hälfte (2) über, das eine im wesentlichen geschlossene Oberfläche aufweist, die lediglich durch schräg zur Laufrichtung angeordnete Lamellen (3,4) unterbrochen ist, wodurch ein hoher Positivanteil der Lauffläche und eine ausgezeichnete Eishaftung erreicht wird.

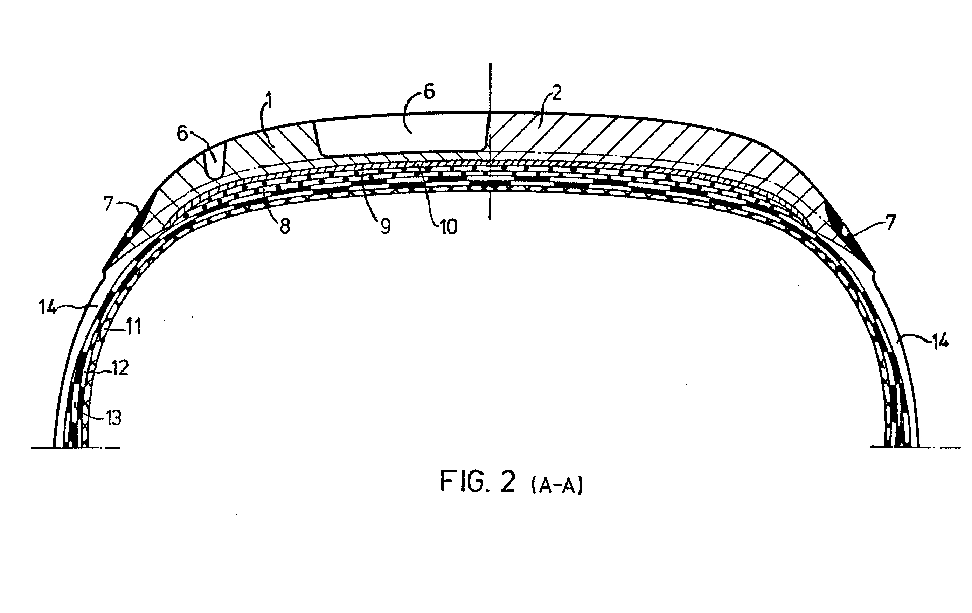

Fig. 2 zeigt einen Schnitt durch den Reifen entlang der Linie A-A in Fig. 1. Die linke Hälfte (1) der Lauffläche besteht aus einem für Sommerreifen geeigneten Kautschuk, der im Zenit des Reifens endet und dort in eine für Winterreifen geeignete Kautschukmischung übergeht, aus der die rechte Hälfte (2) des Reifens besteht. Im Gegensatz zu der mit Profilrillen versehenen linken Hälfte weist die rechte Hälfte, abgesehen von den Lamellen, ein im wesentlichen geschlossenes Profil auf.

Des weiteren bedeuten in der Fig. 2: (6) Profilrille, (7) Schulterstreifen, (8) unterterster Stahlgürtel, (9) oberster Stahlgürtel, (10) Nylon-Gürtelabdeckung, (11) Innenplatte für schlauchlose Reifen, (12 und 13) Karkasslagen, (14) Seitenteil.

Le A 21 206

Die Reifen der Erfindung können aus jedem geeigneten Natur- oder Synthesekautschuk hergestellt werden, dessen Vulkanisatwerte eine Shore-Härte von 45-80 und einen Spannungswert von 6-15 MPa bei 300 % Dehnung aufweisen. Besonders geeignet sind Naturkautschuk, Styrolbutadienkautschuk, Polybutadien- und Ethylen/Propylen-Terpolymerisat-Kautschuk. Das Gewicht des Reifens ist dem eines üblichen Luftreifens vergleichbar. Beispielhaft werden nachfolgend die Kautschukmischungen und ihre Eigenschaften beschrieben, die für den in Fig. 1 und 2 dargestellten Reifen verwendet wurden.

Linke Reifenhälfte:

| | | |
|---|---|---|
| Styrolbutadien-Kautschuk | 100,0 | Gew.-Teile |
| Ruß N-330 | 70,0 | " |
| Mineralöl aromatisch | 26,5 | " |
| Stearinsäure | 2,0 | " |
| Paraffinkohlenwasserstoff | 1,5 | " |
| N-Isopropyl-N'phenyl-p-phenylen-diamin | 2,5 | " |
| Zinkoxid | 3,0 | " |
| 2,2,4-Trimethyl-1,2-dihydrochinolin | 1,3 | " |
| 2-Mercaptobenzothiazol | 0,3 | " |
| Schwefel | 1,8 | " |

| | | |
|---|---|---|
| Mischungsplastizität / 80°C | | |
| Defo-Härte/Defo-Elastizität | 1250/17 | |
| Zugfestigkeit | (MPa) | 16,8 |
| Bruchdehnung | ( % ) | 450 |
| Spannungswert b. 300 % Dehnung | (MPa) | 11,7 |

Le A 21 206

| Weiterreißfestigkeit nach Pohle (N) | 230 | GewTeile |
| Härte bei 20°C (Shore A) | 64 | " |
| Stoßelastizität (DIN 53 512) ( % ) | 33 | |
| DIN-Abrieb (Schmirgel 60) (mm$^3$) | 63 | " |

Rechte Reifenhälfte:

| Naturkautschuk | 70,0 | GewTeile |
| Butadienkautschuk | 30,0 | " |
| Ruß N-332 | 70,0 | " |
| Mineralöl aromatisch | 41,2 | " |
| Stearinsäure | 2,0 | " |
| Paraffinkohlenwasserstoff | 1,0 | " |
| N-Isopropyl-N'-phenyl-p-phenylen-diamin | 2,0 | " |
| 2,2,4-Trimethyl-1,2-dihydrochinolin | 1,5 | " |
| Zinkoxid | 5,0 | " |
| Benzothiazyl-2-sulfenmorpholid | 1,1 | " |
| Tetramethylthiuram-monosulfid | 0,1 | " |
| Schwefel | 1,43 | " |

Mischungsplastizität / 80°C

| Defo-Härte/Defo-Elastizität | 775/18 |
| Zugfestigkeit          (MPa) | 15,5 |
| Bruchdehnung        ( % ) | 480 |
| Spannungswert b. 300 % Dehnung (MPa) | 8,6 |
| Weiterreißfestigkeit nach Pohle (N) | 205 |
| Härte bei 20°C (Shore A) | 55 |
| Stoßelastizität (DIN 53512) (%) | 38 |
| DIN-Abrieb (Schmirgel 60) (mm$^3$) | 109 |

Le A 21 206

Patentansprüche

1. Reifen mit asymmetrischem Laufflächenprofil, dadurch gekennzeichnet, daß, in Laufrichtung betrachtet, die Laufflächen der beiden Reifenhälften eine unterschiedliche Profilgestaltung aufweisen und aus unterschiedlichen, auf das jeweilige Laufflächenprofil spezifisch abgestimmten Kautschuken bestehen, wobei eine Reifenhälfte ein für Sommer- und Winterbedingungen geeignetes Mischprofil besitzt, das aus in sich verzahnten Profilblöcken besteht, die durch in Laufrichtung und quer dazu verlaufende Rillen getrennt sind, und die andere Reifenhälfte ein für Eis- und Schneeglätte geeignetes, nur durch Lamellen unterbrochenes, im wesentlichen geschlossenes Profil besitzt, dessen Lamellen in einem Winkel von 15-45° zur Laufrichtung angeordnet sind.

2. Reifen nach Anspruch 1, dadurch gekennzeichnet, daß die Reifenhälfte mit dem aus Profilblöcken gebildeten Mischprofil aus einem für Sommerreifen geeigneten Kautschuk und die Reifenhälfte mit dem durch Lamellen unterbrochenen Profil aus einem für Winterreifen geeigneten Kautschuk besteht.

3. Reifen nach Anspruch 1 oder 2, dadurch gekenn- zeichnet, daß die tatsächliche Bodenaufstands- fläche (positive Aufstandsfläche) der jeweiligen Reifenhälfte so bemessen ist, daß der durch den unterschiedlichen Kautschuk bedingte unterschied-

Le A 21 206

0071809

liche Abrieb der beiden Reifenhälften kompensiert
wird.

4. Reifen nach Anspruch 1-3, dadurch gekennzeichnet,
daß die Zahl der Lamellen der betreffenden Reifenhälfte so bemessen ist, daß jeweils 50-100 Lamellen Bodenkontakt haben.

5. Reifen nach Anspruch 1-4, dadurch gekennzeichnet,
daß die mit Lamellen versehene Reifenhälfte die
außenliegende Seite des Reifens ist.

<u>Le A 21 206</u>

FIG.1

FIG. 2 (A-A)